# EUROPEAN PATENT SPECIFICATION

(11) **EP 1 318 764 B1**
(45) Date of publication and mention of the grant of the patent: **30.08.2006**
(21) Application number: 01973367.4
(22) Date of filing: 21.09.2001
(51) Int. Cl.: A61C 9/00, A61C 5/06, B05C 17/005

(54) **MIXING TIP FOR DISPENSING MATERIALS**
DÜSENENDSTÜCK ZUM MISCHEN UND AUSGEBEN VON MATERIALIEN
EMBOUT POUR LE MELANGE ET LA DISTRIBUTION DE SUBSTANCES

(30) Priority: 21.09.2000 US 215160 P
(43) Date of publication of application: 18.06.2003
(73) Proprietor: DENTSPLY INTERNATIONAL, INC., York, PA 17405-0872 (US)
(72) Inventor: PIERSON, Paul, Richard, Camden, DE 19934 (US)
(74) Representative: Hartz, Nikolai
(86) International application number: PCT/US2001/029655
(87) International publication number: WO 2002/024103

(56) References cited:
- US-A- 4 995 540
- US-A- 5 269 684
- US-A- 5 324 273
- US-A- 5 816 804

## Description

### TECHNICAL FIELD

The present invention is directed toward a mixing tip for dispensing materials. More particularly, the invention is a tip for mixing and dispensing materials.

### BACKGROUND OF THE INVENTION

Various types of material, such as medical or dental materials are often packaged in preloaded sealed cartridges or in preloaded syringes. For example, US Patent No. 5,707,234 discloses a cartridge for dispensing dental materials. The cartridge is preloaded and is inserted into an ejector device at the time of use. The ejector device is manipulated such that a piston is caused to enter the cartridge and the material in the cartridge is expelled through a nozzle. It also often the case a none-mixing tip is placed onto a syringe containing a material to be dispensed.

Especially in the case of preloaded cartridges, it is often the case that a material must first be mixed with another material in order to form the final product. These materials are often preloaded into cartridges used for a single application of the material. These types of cartridges are sometimes referred to as being a "unit dose." A tip for mixing, dispensing and application of a material having first and second components, according to the preamble of claim 1, is known from the document US 4 995 540.

When a material is mixed at the time of use, especially in the case of a unit dose of dental material, it is often important to not only precisely mix the two components but to also place the components in the proper location in the oral cavity.

A need exists therefore for a mixing tip which will not only mix materials but will facilitate their exact application in for example, the oral cavity. The invention relates to a tip for mixing, dispensing and application as claimed in claim 1.

### BRIEF DESCRIPTION OF THE DRAWINGS

Fig. 1 is a front elevational, partially sectional view of a mixing tip according to the present invention.
Fig. 2 is a top plan view of one embodiment of a mixing tip according to the present invention.

### PREFERRED EMBODIMENT FOR CARRYING OUT THE INVENTION

As shown in the drawings, the present invention is directed to a mixing tip 10 which can be alternatively preloaded or used with a loaded ejection device or syringe (not shown). More particularly, the mixing tip 10 is used with a dual-component material (not shown) which may be required to be mixed substantially immediately before application. While useful with any number of such materials, the present invention has particular application to dual-component dental materials.

Mixing device 10 has a dual-chamber housing generally designated by the number 11 on the drawings. Dual-chamber housing 11 is preferably provided with first and second chambers 12 and 13 which are separated by a web or plenum 14. Chambers 12 and 13 have separate input passages 15 and 16 respectively, and separate output passages 17 and 18, also respectively. Output passages 17 and 18 fluidly communicate with first mixing chamber 19.

Mixing chamber 19 is in turn in communication with the interior passage 20 of a dispensing barrel 21. It will be appreciated therefore, that material flowing through input passages 15 and 16 or held within chambers 12 and 13 when tip 10 is pre-loaded, will be held separately by the division provided by plenum 14 while held within chambers 12 and 13 and will then be dispensed into chamber 19 to be expressed through interior passage 20.

Disposed within interior passage 20 is a static mixing device 30. Static mixing device 30 is preferably a length of twisted wire which is generally designated by the number 31 on the attached drawings. While the length of twisted wire 31 is not necessarily critical to the practice of the present invention, it is preferred that the wire be approximately the same length as barrel 21.

In another preferred embodiment of the invention, static mixing element 30 is provided at one end with a brush 32. It is to be appreciated that material flowing through barrel 21 will be caused to physically contact brush 32. By manipulating mixing tip 10, brush 32 can be used to facilitate precise application of the expressed material. The material from which brush 32 is fabricated is not critical to the practice of the present invention. The material should be substantially impervious to degradation caused by the material expressed through the mixing tip 10, and should not cause substantial discomfort or would be otherwise detrimental for the intended purpose. One preferred type of brush would be nylon bristles that are attached to static mixing device 30 in any conventional manner.

According to another embodiment of the invention, barrel 21 is made of a flexible, preferably plastic material that can be bent at any of a variety of angles in order to facilitate application of the expressed material.

First and second chambers 12 and 13 are preferably provided at an end distal to static mixing device 30 or at some other location therein, with a detent or snap bead 40 and a flange 41 which will mate to the device which is used to express material through mixing tip 10. While this is one preferred method of mating and affixing to the expressing device, any other conventional such method is also within the scope of the present invention.

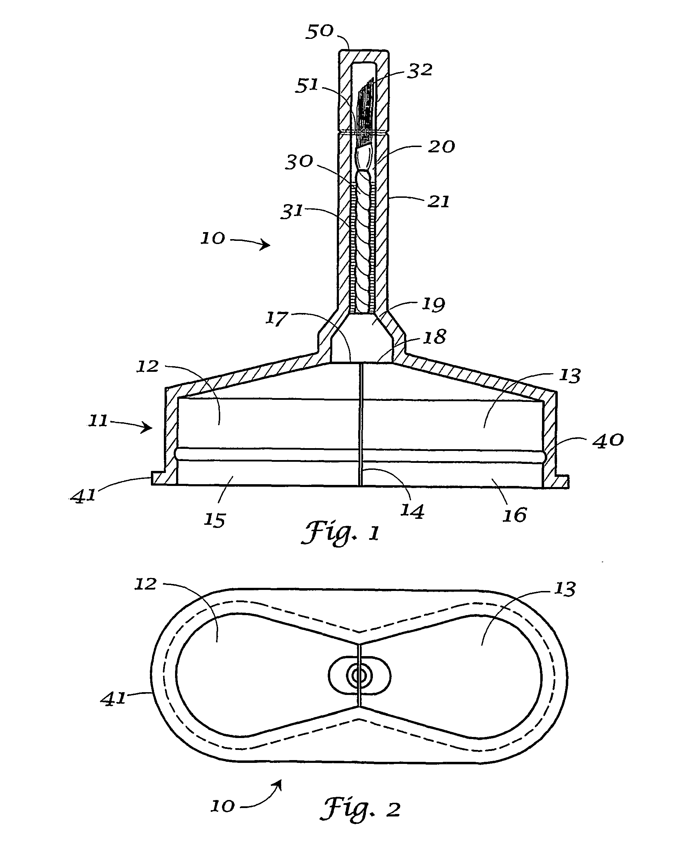

According to another embodiment of the present invention, as in shown in drawing figure 2, static mixing device 10 can be sealed with a snap-off cap 50. This is especially useful when mixing device 10 is preloaded with dental material, or when mixing device 10 is placed upon a preloaded syringe or other expressing device prior to use. In use, cap 50 encloses the open end 51 of barrel 21. At the time of use, or at some other time, cap 50 is snapped, broken or otherwise removed from barrel 21, thereby exposing open end 51 and brush 32 for use.

A mixing and dispensing syringe is shown by way of example in US Patent 4,776,704 which is hereby incorporated by reference or its disclosure.

It is apparent therefore, that a mixing tip according to the present invention is an advantageous improvement over dispensing tips previously known, and otherwise provides an improvement in the art.

## Claims

1. A tip (10) for the dispensing, mixing and application of a material having first and second components to be mixed prior to application comprising a housing (11), first and second chambers (12, 13) disposed within said housing (11) and separated by a plenum (14), said first and second chambers (12, 13) having input (15, 16) and output (17, 18) orifices, said output orifices (17, 18) fluidly communicating with a mixing reservoir (19), a dispensing barrel (21) having a hollow interior also in fluid communication with said dispensing reservoir and having an output orifice (51), a static mixing device (30) disposed within said barrel, **characterised by** said static mixing device comprising a twisted wire (31) component.

2. A tip as in claim 1 wherein static mixing device is also provided with a brush at least partially protruding from said barrel.

3. A tip as in claim 1 wherein said barrel and said enclosed static mixing device can be bent at an angle.

## Patentansprüche

1. Mischspitze zum Abgeben, Mischen und zur Applikation eines Materials, das erste und zweite Komponenten aufweist, die vor der Applikation zu mischen sind, umfassend ein Gehäuse (11), erste und zweite Kammern (12, 13), die innerhalb des Gehäuses (11) vorgesehen sind und durch ein Plenum (14) getrennt sind, wobei die ersten und zweiten Kammern (12, 13) Einlass- (15, 16) und Auslass(17,18)-öffnungen aufweisen, die Auslassöffinungen (17, 18) mit einem Mischreservoir (19) in Fluidkommunikation stehen, einen Abgabezylinder (21), der ein hohles Inneres aufweist, der auch in Fluidkommunikation mit dem Abgabereservoir ist und eine Auslassöffnung (51) aufweist, eine innerhalb des Zylinders vorgesehene statische Mischeinrichtung (30), **dadurch gekennzeichnet, dass** die statische Mischeinrichtung eine verdrillte Drahtkomponente (31) umfasst.

2. Spitze nach Anspruch 1, worin die statische Mischeinrichtung auch mit einer Bürste versehen ist, die zumindest teilweise aus dem Zylinder hervorsteht.

3. Spitze nach Anspruch 1, worin der Zylinder und die umschlossene statische Mischeinrichtung in einem Winkel gebogen werden können.

## Revendications

1. Embout (10) pour la distribution, le mélange et l'application d'une matière comportant des premier et deuxième composants devant être mélangés avant application comprenant un logement (11), des première et deuxième chambres (12, 13) disposées au sein dudit logement (11) et séparées par un espacement (14), lesdites première et deuxième chambres (12, 13) comportant des orifices d'entrée (15, 16) et de sortie (17, 18), lesdits orifices de sortie (17, 18) étant en communication de fluide avec un réservoir de mélange (19), un cylindre de distribution (21) ayant un intérieur creux également en communication de fluide avec ledit réservoir de distribution et comportant un orifice de sortie (51), un dispositif de mélange statique (30) disposé au sein dudit cylindre, **caractérisé par** ledit dispositif de mélange statique comprenant un élément sous forme de fil métallique torsadé.

2. Embout selon la revendication 1, dans lequel le dispositif de mélange statique est également pourvu d'un pinceau faisant au moins partiellement saillie depuis ledit cylindre.

3. Embout selon la revendication 1, dans lequel ledit cylindre et ledit dispositif de mélange statique enfermé peuvent être pliés selon un angle.
